# EUROPEAN PATENT APPLICATION

(11) **EP 4 718 608 A1**
(43) Date of publication of application: **01.04.2026**
(21) Application number: 25182219.3
(22) Date of filing: 12.06.2025
(51) Int. Cl.: H01M 50/244, H01M 50/249

(54) **CASE OF BATTERY PACK, BATTERY PACK, AND VEHICLE**

(30) Priority: 30.09.2024 CN 202422411090 U; 24.01.2025 WO PCT/CN2025/074770
(71) Applicant: Eve Energy Co., Ltd., Huizhou, Guangdong 516006 (CN)
(72) Inventor: XU, Dehong, Huizhou, Guangdong, 516006 (CN); ZHONG, Yulu, Huizhou, Guangdong, 516006 (CN); ZHANG, Yunfeng, Huizhou, Guangdong, 516006 (CN); YANG, Shao, Huizhou, Guangdong, 516006 (CN)
(74) Representative: Berggren Oy

(57) **Abstract**

A case of a battery pack, a battery pack, and a vehicle are provided. The case of the battery pack includes a side beam and a mounting block. A side wall of the side beam is provided with a mounting groove. At least a part of the mounting block being accommodated within the mounting groove. The mounting block is fixedly connected to the side beam, and is configured to be connected to an external device.

## Description

### TECHNICAL FIELD

This application relates to the field of battery energy storage technologies, and in particular to a case of a battery pack, a battery pack, and a vehicle.

### BACKGROUND

In battery pack design, a side beam, as a key component connecting a case to a vehicle body, is crucial for ensuring an installation stability and cost efficiency of the battery pack.

In related technologies, a mounting structure, as a transition piece between a case of a battery pack and the vehicle body, is welded to a side wall of the side beam.

### SUMMARY

However, the mounting structure is directly welded to the side wall of the side beam, which occupies a large amount of space.

According to a first aspect, this application provides a battery pack case, including:
a side beam, where a side wall of the side beam is provided with a mounting groove; and
a mounting block, at least a part of the mounting block being accommodated within the mounting groove, the mounting block being fixedly connected to the side beam, and the mounting block being configured to be connected to an external device.

According to a second aspect, this application provides a battery pack, including a case of the battery pack as described the above aspect.

According to a third aspect, this application provides a vehicle, including:
a vehicle body; and
the battery pack as described above, where the mounting block of the battery pack is connected to the vehicle body.

### Beneficial effects

According to a case of the battery pack provided in this application, a side wall of the side beam is provided with a mounting groove, a mounting block is at least partially accommodated within the mounting groove and fixedly connected to the side beam, so that the mounting block is partially or fully embedded into the mounting groove of the side beam. As a result, there is no need to directly weld a mounting structure to the side wall of the side beam as in related technologies, avoiding the mounting structure protruding entirely outside the battery pack, thereby reducing space occupation.

### BRIEF DESCRIPTION OF THE DRAWINGS

FIG. 1 is an exploded schematic diagram of a structure of a battery pack according to the present application;
FIG. 2 is a schematic diagram of a structure of a side beam and a mounting block in FIG. 1;
FIG. 3 is an enlarged schematic diagram of part A in FIG. 2;
FIG. 4 is an exploded schematic diagram of a structure of the side beam and the mounting block in FIG. 2 (without showing a first weld mark and a second weld mark); and
FIG. 5 is an enlarged schematic diagram of part B in FIG. 4.

Explanations of reference numerals:
1000, battery pack; 100, case; 1, side beam; 11, mounting groove; 12, reinforcing protrusion; 2, mounting block; 21, first weight reduction hole; 22, second weight reduction hole; 23, avoidance recess; 24, mounting hole; 25, block body; 26, threaded sleeve; 261, threaded hole; 3, first weld mark; 4, second weld mark; 5, bottom plate; 6, front beam; 7, front expansion beam; 8, integrated beam; 9, case cover; 10, glue; 20, sealing strip; 200, battery cell module.

### DETAILED DESCRIPTION

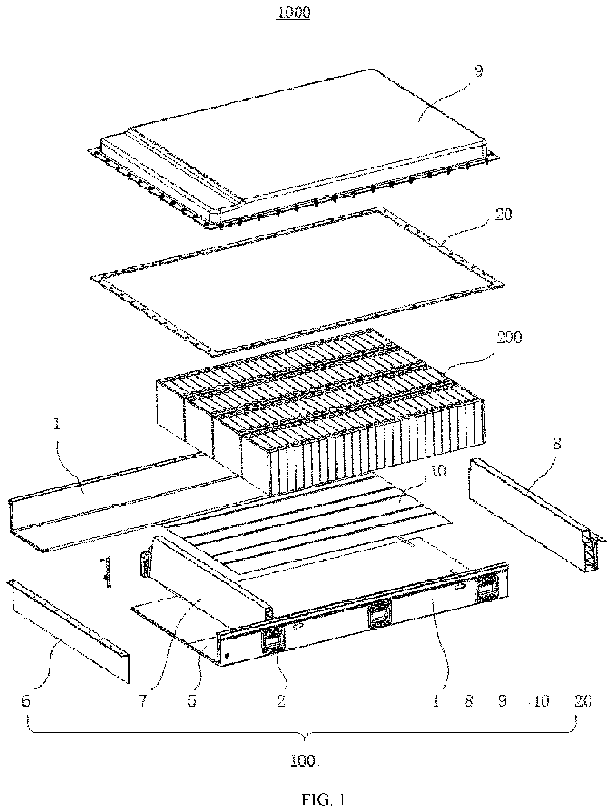

Please refer to FIG. 1 to FIG. 5, this application provides a battery pack case. FIG. 1 to FIG. 5 are schematic diagrams of a structure of a battery pack according to this application.

A case 100 of a battery pack 1000 includes a side beam 1 and a mounting block 2.

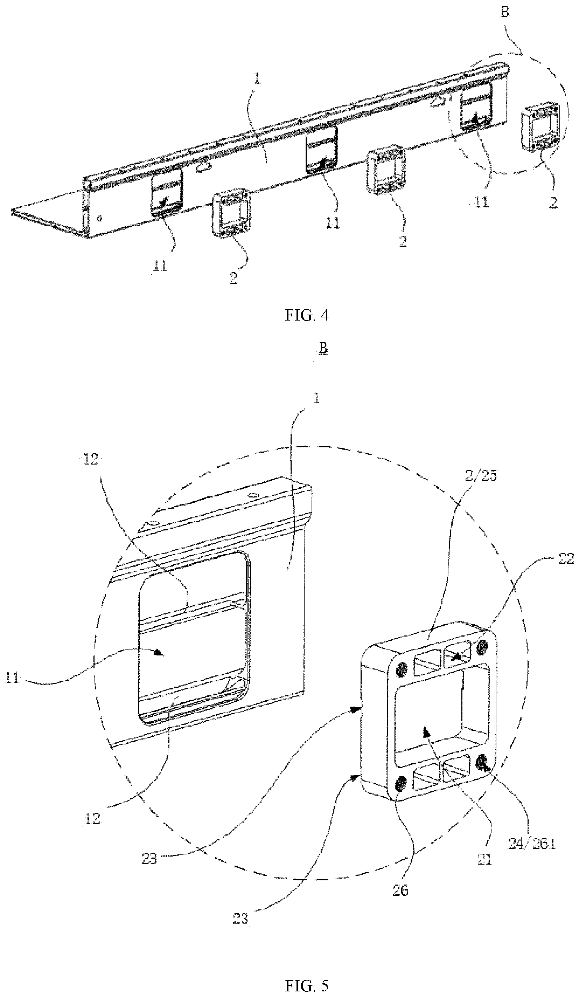

The side beam 1, as a supporting structure of the case 100 of the battery pack 1000, includes a side wall provided with a mounting groove 11 (referring to FIG. 4 and FIG. 5). The mounting groove 11 is designed to cooperate with the mounting block 2, providing positioning and installation space for the mounting block 2.

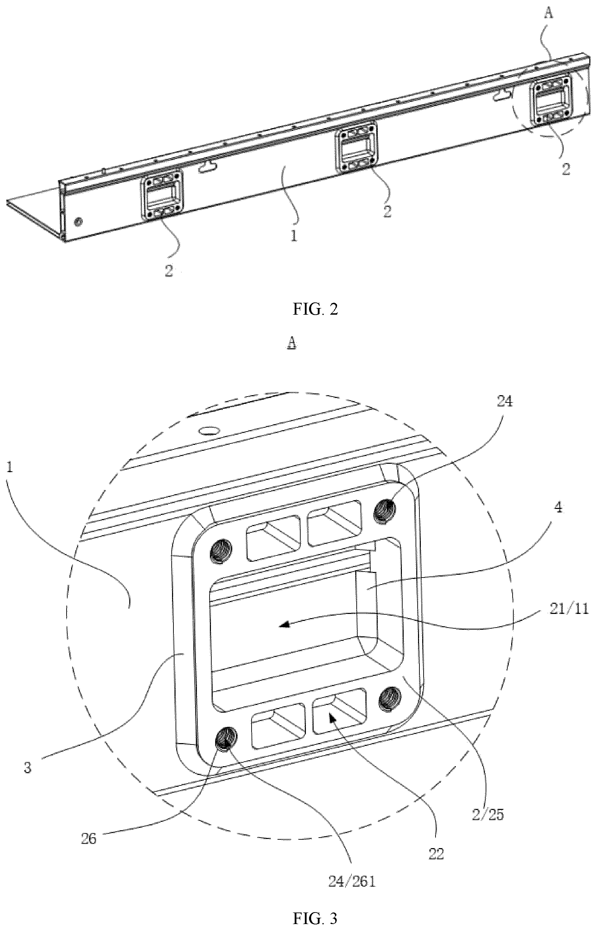

The mounting block 2 is at least partially accommodated in the mounting groove 11 of the side beam 1 (referring to FIG. 3) and is fixedly connected to the side beam 1. The mounting block 2 functions as connecting to an external device (such as a vehicle body), thereby ensuring a stable installation of the battery pack 1000. The mounting block 2 can be directly connected to the external device or be connected to the external device through a transition piece (such as a mounting ear).

According to the technical solution of this application, the mounting groove 11 is provided in the side wall of the side beam 1, the mounting block 2 is at least partially accommodated within the mounting groove 11 and is fixedly connected to the side beam, so that the mounting block 2 is partially or fully embedded into the mounting groove 11 of the side beam 1. As a result, there is no need to directly weld a mounting structure to the side wall of the side beam 1 as in related technologies, avoiding a mounting structure protruding entirely outside the battery pack 1000, thereby reducing space occupation.

It can be understood that, as shown in FIG. 1, the case 100 of the battery pack 1000 can also include components such as a bottom plate 5, a front beam 6, a front expansion beam 7, an integrated beam 8, a case cover 9, a glue 10, and a sealing strip 20. A primary improvement of this application focuses on the side beam 1. Therefore, these components are not strictly defined and can be adapted based on the actual structural design of the case 100. Further details on these components will not be reiterated here.

It can also be understood that while the mounting block 2 installed in the mounting groove 11 can achieve a certain level of fixed connection, this connection may not be adequate to withstand mechanical loads under all working conditions, especially vibrations, impacts, and acceleration changes experienced during vehicle operation. Therefore, to enhance structural strength and ensure connection reliability, a connection structure can be arranged between the mounting block 2 and the side beam 1. The connection structure can be mechanical fasteners, structural adhesives, or bonding agents.

In some embodiments, as shown in FIG. 3, a first weld mark 3 is arranged between the mounting block 2 and the side beam 1. The first weld mark 3 is arranged along a periphery of opening of the mounting groove 11. In these embodiments, the first weld mark 3 can ensure the formation of a continuous metal structure between the mounting block 2 and the side beam 1, effectively transmitting force and reducing a risk of connection loosening or breakage due to vibrations or impacts. The first weld mark 3 is arranged along the periphery of the opening of the mounting groove 11, enhancing structural strength and ensuring connection reliability, thereby maintaining the structural integrity and strength between the side beam 1 and the mounting block 2.

In some embodiments, as shown in FIG. 3 to FIG. 5, the mounting block 2 is provided with a first weight reduction hole 21. The first weight reduction hole 21 is extended through the mounting block 2 from a bottom of the mounting groove 11 to the mounting block 2. A second weld mark 4 is arranged between the mounting block 2 and the side beam 1, and the second weld mark 4 is arranged along a periphery of the first weight reduction hole 21. In these embodiments, the first weight reduction hole 21 reduces the amount of material used, thereby reducing a weight of the mounting block 2. This not only lowers material costs but also reduces the overall load of the battery pack 1000. The second weld mark 4 is arranged along the periphery of the first weight reduction hole 21, enhancing the connection stability between the mounting block 2 and the side beam 1, ensuring that despite the presence of the first weight reduction hole 21, the connection between the mounting block 2 and the side beam 1 remains stable, effectively transmitting and dispersing stress, improving vibration resistance and impact resistance, and ensuring the connection strength and reliability between the mounting block 2 and the side beam 1 under various working conditions.

In some embodiments, as shown in FIG. 3 and FIG. 5, the mounting block 2 is provided with a second weight reduction hole 22. The second weight reduction hole 22 is extended through the mounting block 2 in the same direction as the first weight reduction hole 21. A size of the second weight reduction hole 22 is smaller than a size of the first weight reduction hole 21. In these embodiments, the inclusion of both the first weight reduction hole 21 and the second weight reduction hole 22, with the size of the second weight reduction hole 22 being smaller than the size of the first weight reduction hole 21, ensures that the mounting block 2 maintains sufficient structural strength while achieving weight production.

In some embodiments, the second weight reduction hole 22 is arranged above and/or below the first weight reduction hole 21 in a vertical direction. This means that when the case 100 of the battery pack 1000 is mounted on the external device, the second weight reduction hole 22 is not arranged to a left or right direction of the first weight reduction hole 21. This arrangement helps enhance the structure's resistance to bending and torsional deformation. At a connection position between the mounting block 2 and the side beam 1, this layout reduces the impact of the mounting moment on the structure, improves the overall structural rigidity, and ensures lightweight design.

In some embodiments, as shown in FIG. 5, the side beam 1 is provided with a reinforcing protrusion 12 at the bottom of the mounting groove 11. The mounting block 2 is provided with an avoidance recess 23 on a side facing the bottom of the mounting groove 11. The avoidance recess 23 is matched with the reinforcing protrusion 12. In these embodiments, the side beam 1 is provided with a reinforcing protrusion 12 at the bottom of the mounting groove 11, enhancing a local structural strength of the side beam 1 in the area of the mounting groove 11, improving the overall structural rigidity and resistance to deformation. The mounting block 2 is provided with an avoidance recess 23 on the side facing the bottom of the mounting groove 11, matching the reinforcing protrusion 12, ensuring precise alignment between the mounting block 2 and the side beam 1 during installation. This combination of the avoidance recess 23 and the reinforcing protrusion 12 achieves structural complementarity and reinforcement. Specifically, a reinforcing rib is provided inside the side beam 1. During the machining of the mounting groove 11, a part of the reinforcing rib is removed, and a remaining part forms the reinforcing protrusion 12. During the machining of the mounting groove 11, by selectively retaining a part of the reinforcing rib to create the reinforcing protrusion 12, excessive machining (such as over-milling) is avoided, preventing a reduction in structural strength and thereby simplifying the machining process.

In some embodiments, the material of the side beam 1 includes aluminum or aluminum alloy. In these embodiments, aluminum or aluminum alloy is used as the material for the side beam 1, so that mechanical processing is facilitated, processing difficulty is reduced. A density of aluminum or aluminum alloy is much lower than a density of steel, enabling the side beam 1 to maintain sufficient strength while significantly reducing weight, thereby reducing the mass of the case 100 and improving the energy density of the battery pack 1000. Specifically, the mounting groove 11 is machined on an aluminum profile beam to form the side beam 1.

In some embodiments, the material of the mounting block 2 includes aluminum or aluminum alloy. In these embodiments, aluminum or aluminum alloy is used as the material for the mounting block 2, so that mechanical processing is facilitated, processing difficulty is reduced. The density of aluminum or aluminum alloy is much lower than the density of steel, enabling the mounting block 2 to maintain sufficient strength while significantly reducing weight, thereby reducing the mass of the case 100 and improving the energy density of the battery pack 1000. Specifically, the mounting block 2 is formed by aluminum extrusion.

In some embodiments, the case 100 of the battery pack 1000 also includes a mounting ear, where the mounting ear and the mounting block 2 are made of the same material, and the mounting ear is welded to the mounting block 2. Alternatively, the mounting ear and the mounting block 2 are made of different materials, with the mounting ear is detachably connected to the mounting block 2. In these embodiments, the material selection for the mounting ear is more flexible, and the material of the mounting ear can be chosen based on specific needs for cost effectiveness or enhanced performance, thereby reducing costs. For example, in case that the mounting block 2 is made of aluminum or aluminum alloy, the mounting ear can also be made of aluminum or aluminum alloy and welded to the mounting block 2, ensuring structural integrity and strength. The mounting ear can also be made of steel and detachably connected to the mounting block 2, as steel offers high strength and is cost-effective, ensuring the structural strength of the mounting ear while reducing costs.

In some embodiments, as shown in FIG. 3 and FIG. 5, the mounting block 2 is provided with a mounting hole 24 on a side away from the bottom of the mounting groove 11. The mounting hole 24 is configured to accommodate a fastener, to enable the mounting block 2 to be detachably connected to the external device. In these embodiments, the placement of the mounting hole 24 on the side, away from the bottom of the mounting groove 11, of the mounting block 2 ensures a stable connection with the external device while providing structural flexibility and ease of maintenance through the use of detachable fasteners (such as screws or bolts), ensuring structural stability and connection reliability while improving the adaptability and maintenance efficiency of the overall structure. Specifically, multiple mounting holes 24 are provided, and the multiple mounting holes 24 are arranged around the periphery of the first weight reduction hole 21. The multiple mounting holes 24 help optimize load distribution, reduce vibration, and improve the stability and performance of the overall structure.

In some embodiments, the side beam 1 and the mounting block 2 are designed as separate components. In these embodiments, the side beam 1 and the mounting block 2 are designed as independent parts and manufactured separately, so that the design of the side beam 1 is simplified, avoiding the need for extensive machining and complex die-casting molds, streamlining the production process, and reducing manufacturing costs. The independent manufacturing mode of the mounting block 2 achieves modularity, enabling more cost-effective production methods, such as aluminum extrusion, small-batch machining, or standard die-casting, further lowering costs. For different mounting positions, only the position of the mounting groove 11 on the side beam 1 needs minor adjustments, without altering a main body of the side beam 1, simplifying both the design and production process. When adapting to different vehicle models, only the mounting block 2 requires replacement or adjustment, eliminating the need to redesign the side beam 1, significantly improving versatility and installation convenience. In other words, through the separate design and independent manufacturing of the side beam 1 and the mounting block 2, the battery pack 1000 can flexibly adapt to various vehicle models and mounting positions, reducing costs while improving versatility and market adaptability.

In some embodiments, as shown in FIG. 3 and FIG. 5, the mounting block 2 includes a block body 25 and a threaded sleeve 26. The block body 25 is provided with a fastening hole, and the threaded sleeve 26 is installed within the fastening hole. A threaded hole 261 of the threaded sleeve 26 forms the mounting hole 24. In these embodiments, the block body 25 is provided with a fastening hole to accommodate the threaded sleeve 26, and the threaded hole 261 of the threaded sleeve 26 directly serves as the mounting hole 24. This threaded hole 261 is configured to cooperate with a fastener (such as a screw or bolt) to achieve a detachable connection. The use of the threaded sleeve 26 increases the stability of the connection between the fastener and the mounting block 2, ensuring that the connection remains in good condition even under heavy loads or after prolonged use, thereby avoiding connection loosening due to material fatigue or wear. The threaded sleeve 26 is installed on the block body 25, so that the material of the block body 25 is shielded from direct wear during the installation and removal of the fastener, extending the service life of the mounting block 2. Additionally, the threaded sleeve 26, as an independent component, can be replaced separately if it becomes worn or damaged, eliminating the need to replace the entire mounting block 2, reducing maintenance costs and operational complexity.

According to the second aspect of this application, as shown in FIG. 1, a battery pack 1000 is provided, which includes the case 100 of the battery pack 1000 described above. Since the battery pack 1000 incorporates all the technical solutions of the above embodiments, it at least benefits from the advantages brought by the technical solutions of the above embodiments, which will not be reiterated here. Additionally, the battery pack 1000 includes a battery cell module 200 accommodated in the case 100.

According to the third aspect of this application, a vehicle is provided, including a vehicle body and the battery pack 1000 as described above. The mounting block 2 of the battery pack 1000 is connected to the vehicle body. The structure of the battery pack 1000 is as described previously. Since the vehicle incorporates all the technical solutions of the above embodiments, it at least benefits from the advantages brought by the technical solutions of the above embodiments, which will not be reiterated here.

## Claims

1. A case (100) of a battery pack (1000), **characterized in that** the case (100) of the battery pack (1000) comprises:
a side beam (1), wherein a side wall of the side beam (1) is provided with a mounting groove (11); and,
a mounting block (2), at least a part of the mounting block (2) being accommodated within the mounting groove (11), wherein the mounting block (2) is fixedly connected to the side beam (1), and the mounting block (2) is configured to be connected to an external device.

2. The case (100) of the battery pack (1000) according to claim 1, **characterized in that** a first weld mark (3) is arranged between the mounting block (2) and the side beam (1), and the first weld mark (3) is arranged along a periphery of an opening of the mounting groove (11).

3. The case (100) of the battery pack (1000) according to claim 1 or 2, **characterized in that** the mounting block (2) is provided with a first weight reduction hole (21), and the first weight reduction hole (21) is extended through the mounting block (2) in a direction from a bottom of the mounting groove (11) to the mounting block (2);
a second weld mark (4) is arranged between the mounting block (2) and the side beam (1), and the second weld mark (4) is arranged along a periphery of the first weight reduction hole (21).

4. The case (100) of the battery pack (1000) according to claim 3, **characterized in that** the mounting block (2) is provided with a second weight reduction hole (22), and the second weight reduction hole (22) is extended through the mounting block (2) in a same direction as the first weight reduction hole (21);
a size of the second weight reduction hole (22) is smaller than a size of the first weight reduction hole (21).

5. The case (100) of the battery pack (1000) according to claim 4, **characterized in that** the second weight reduction hole (22) is arranged above and/or below the first weight reduction hole (21) in a vertical direction.

6. The case (100) of the battery pack (1000) according to any one of claims 1 to 5, **characterized in that** the side beam (1) is provided with a reinforcing protrusion (12) at a bottom of the mounting groove (11); and
the mounting block (2) is provided with an avoidance recess (23) on a side facing the bottom of the mounting groove (11), and the avoidance recess (23) is matched with the reinforcing protrusion (12).

7. The case (100) of the battery pack (1000) according to claim 6, **characterized in that** a reinforcing rib is provided inside the side beam (1); a part of the reinforcing rib is removed during a machining of the mounting groove (11), and a remaining part forms the reinforcing protrusion (12).

8. The case (100) of the battery pack (1000) according to any one of claims 1 to 7, **characterized in that** a material of the side beam (1) comprises aluminum or an aluminum alloy; and/or,
a material of the mounting block (2) comprises aluminum or an aluminum alloy.

9. The case (100) of the battery pack (1000) according to any one of claims 1 to 8, **characterized in that** the case (100) of the battery pack (1000) further comprises a mounting ear, and the mounting ear and the mounting block (2) are made of a same material, and the mounting ear is welded to the mounting block (2); or,
the mounting ear and the mounting block (2) are made of different materials, and the mounting ear is detachably connected to the mounting block (2).

10. The case (100) of the battery pack (1000) according to claim 9, **characterized in that** the mounting block (2) is provided with at least one mounting hole (24) on a side away from the bottom of the mounting groove (11), and the mounting hole (24) is configured to accommodate a fastener to enable the mounting block (2) to be detachably connected to the mounting ear.

11. The case (100) of the battery pack (1000) according to claim 10, **characterized in that** the at least one mounting hole (24) comprises a plurality of mounting holes (24), and the plurality of mounting holes (24) are arranged around a periphery of the first weight reduction hole (21).

12. The case (100) of the battery pack (1000) according to claim 10 or 11, **characterized in that** the mounting block (2) comprises:
a block body (25), provided with a fastening hole; and,
a threaded sleeve (26) installed in the fastening hole, wherein the mounting hole (24) is formed by a threaded hole (261) of the threaded sleeve (26).

13. The case (100) of the battery pack (1000) according to any one of claims 1 to 12, **characterized in that** the side beam (1) and the mounting block (2) are separately arranged.

14. A battery pack (1000), **characterized in that** the battery pack (1000) comprises the case (100) of the battery pack (1000) according to any one of claims 1 to 13.

15. A vehicle, **characterized in that** the vehicle comprises:
a vehicle body; and,
the battery pack (1000) according to claim 14, wherein the mounting block (2) of the battery pack (1000) is connected to the vehicle body.
